# EUROPEAN PATENT APPLICATION

(11) **EP 1 180 572 A2**
(43) Date of publication of application: **20.02.2002**
(21) Application number: 01306197.3
(22) Date of filing: 19.07.2001
(51) Int. Cl.: E05F 15/12, F16H 19/04, F16H 49/00

(54) **Drive means**

(30) Priority: 10.08.2000 GB 0019719
(71) Applicant: Baker, Joseph Peter William, Ascot, Berkshire SL5 7PF (GB)
(72) Inventor: Baker, Joseph Peter William, Ascot, Berkshire SL5 7PF (GB)
(74) Representative: Eder, Ephry

(57) **Abstract**

Motion imparting means to effect angular movement of a pivoting member (10) mounted for pivoting motion about an upstanding axis (22), wherein
said motion imparting means comprises first and second assemblies,
said first assembly including drive means (65) comprising a magnetic body (15) that
   (a) has an outer cylindrical surface and radial end surfaces
   (b) is polarised axially of the cylindrical surface, and
   (c) has each radial end engaged by an associated pole plate (14,16) that extends outwardly beyond the body's cylindrical surface with its periphery spaced from that cylindrical surface,
said second assembly comprises an engagement plate (53) to be attached to the pivoting member (10) and, in use, be engaged by the pole plates (14,16) and magnetically coupled thereto,
and wherein a lever (34) is provided to one end of which the first assembly (65) is to be mounted and that is to be mounted by its opposite end for pivoting motion about an upstanding axis (32) spaced from the pivoting member's pivoting axis (22) and such that said drive means (65) can in use effect a magnetic drive coupling between the first and second assemblies.

In one arrangement, one of the pole plates (16) is provided around its periphery with a plurality of mutually spaced protrusions (19) or depressions, and the engagement plate (53) is provided with correspondingly spaced depressions (21) or protrusions, the protrusions (19) of one said plate (16) in use engaging in the depressions (21) of the other said plate (53) to provide a positive inter-engagement between them that resists slippage across magnetically coupled surface portions of the drive means.

In another arrangement (Fig 6), each pole plate (14,16) is of generally disc-like form having a peripheral face of cylindrical form, a radial face directed away from the body, and between these two faces a chamfered face (54,56), and the engagement plate (63) has a surface (55) provided with an elongate groove of triangular or frusto-triangular cross-section providing inclined faces which are in use engaged by and magnetically coupled to the two said outwardly-directed chamfered faces (54,56) of the first assembly.

## Description

### Technical Field

This invention relates to drive means and in particular to drive means effecting motion transmission by a magnetic coupling.

### Background Art

Known magnetic drive arrangements include those described disclosed in UK Patent Application No. 9912192.3 (Publication No. 2338603-A), which comprise a magnetic body that (a) has an outer cylindrical surface and radial end walls, (b) is magnetically polarised axially of the cylindrical surface, and (c) has at each radial end of the cylindrical surface a pole plate of generally disc-like form which extends outwardly beyond the cylindrical surface with its periphery spaced from that cylindrical surface; the drive arrangement further comprising a planar or arcuate plate to which the pole plates are magnetically coupled. Rotation of the body imparts relative motion between the periphery of the pole plates and the planar or arcuate plate to which the pole plates are magnetically coupled.

It will be appreciated that the magnetically imparted rotational drive can slip if countered by a sufficient "overriding" force. This can be beneficial in some magnetic drive arrangements but for most such arrangement is deemed detrimental ― generally because the overriding force is in use too variable and too much of an unknown quantity.

### Summary of the Invention

With a view to providing for a more definitive and pre-determinable threshold between non-slipping and slipping coupling between the magnetically coupled parts, a first aspect of the present invention provides drive means between first and second assemblies,
wherein the first assembly comprises a magnetic body
(a) having an outer cylindrical surface and radial end surfaces
(b that is polarised axially of the cylindrical surface, and
(c) has each radial end engaged by an associated pole plate that extends outwardly beyond the body's cylindrical surface with its periphery spaced from that cylindrical surface,
and wherein the second assembly comprises an engagement plate engaged by the pole plates and magnetically coupled thereto,
characterised in that one of the pole plates is provided around its periphery with a plurality of mutually spaced protrusions or depressions, and in that the engagement plate is provided with correspondingly spaced depressions or protrusions, the protrusions of one said plate in use engaging in the depressions of the other said plate to provide a positive inter-engagement between them that resists slippage across magnetically coupled surface portions of the drive means.

Preferably the magnetic body is mounted on a shaft, e.g. of square or other non-circular cross-section, that is a loose fit within a bore of like cross-section shape in the body. This allows the body to have a limited degree of twist and permit the first assembly to accommodate tolerances within it and/or in the second assembly.

Advantageously the drive means is utilised to power an arcuately movable closure member, e.g. an electrically operable gate.

According to a second aspect of this invention there is provided drive means between first and second assemblies wherein the first assembly comprises a magnetic body
(a) having an outer cylindrical surface and radial end surfaces,
(b) that is polarised axially of the cylindrical surfaces, and
(c) has each radial end engaged by an associated pole plate that extends outwardly beyond the body's cylindrical surface with its periphery spaced from that cylindrical surface,
characterised in that each pole plate is of generally disc-like form having a face directed away from the chamfered face between the pole plate's periphery and its magnetic body,
and further characterised in that the second assembly, which is to be magnetically coupled to the first assembly, comprises a surface provided with an elongate groove of triangular or frusto-triangular cross-section providing inclined faces which are in use engaged by and magnetically coupled to the two said outwardly-directed chamfered faces of the first assembly.

According to still a third aspect of this invention there is provided closure means comprising a closure member mounted for pivoting motion about an upstanding axis, drive means to move the closure member pivotally about said axis, said drive means in use effecting a magnetic drive coupling between first and second assemblies, wherein the first assembly comprising a magnetic body that
(a) has an outer cylindrical surface and radial end surfaces
(b is polarised axially of the cylindrical surface, and
(c) has each radial end engaged by an associated pole plate that extends outwardly beyond the body's cylindrical surface with its periphery spaced from that cylindrical surface,
and wherein the second assembly comprises an engagement plate engaged by the pole plates and magnetically coupled thereto,
characterised in that the engagement plate is attached to the closure member and in that the first assembly is mounted on one end of a lever that has its opposite end mounted for pivoting motion about an upstanding axis spaced from the closure member's pivoting axis.

Preferably said drive means accords with said first or said second aspect of the present invention.

### Brief Description of the Drawings

By way of example one embodiment of this invention will now be described with reference to the accompanying drawings of which:
Figure 1 is a perspective diagrammatic view of an electrically operable gate embodying the present invention, in closed condition
Figure 2 is a plan view of the gate of Fig 1 in the closed condition,
Figure 3 is a plan view of the gate of Fig 1 in the open condition,
Figure 4 is a schematic cross-sectional view of drive means included in the embodiment;
Figure 5 is a diagrammatic enlarged sectional view along the line V-V in Fig 4, and
Figure 6 is a schematic partly-sectioned lateral view of alternative drive means to that illustrated in Figs. 4 and 5.

### Detailed Description of Example(s) of the Invention

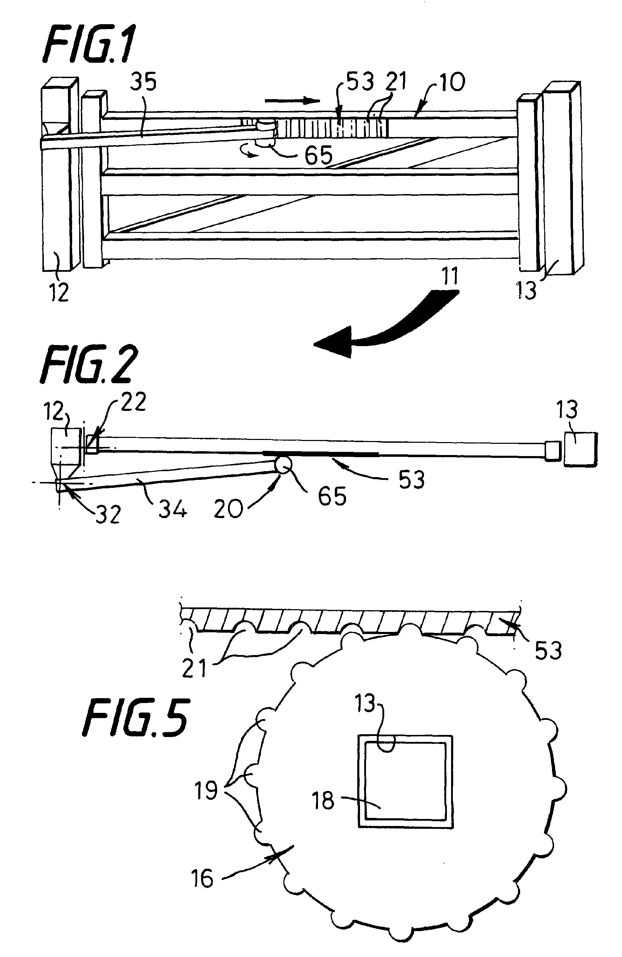

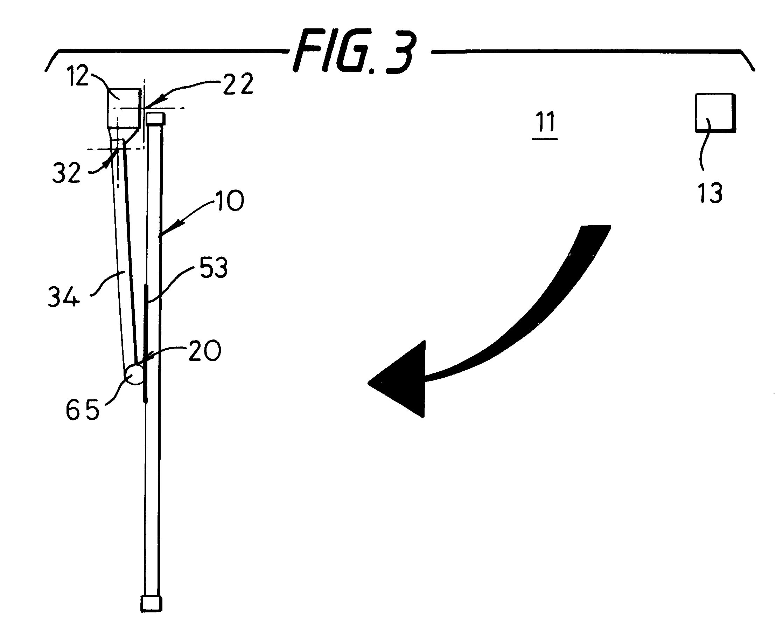

Figs 1 to 3 illustrate a closure member in the form of a gate 10 movable from a closed condition (Figs 1 and 2) to an open condition (Fig 3) in relation to an opening or throughway 11 between two posts 12,13. The gate 10 is mounted pivotally on post 12, the vertical pivot axis being referenced 22. A drive mechanism 20 is provided for opening and closing the gate, this mechanism comprising a drive device 65 mounted on one end of an arm 34 that is pivotally mounted by its other end to the post 12, the vertical pivot axis being referenced 32 and being spaced from the gate's vertical pivot axis 22. The drive device 65 engages a plate 53 of magnetic material that is attached to the gate 10.

The drive device 65 comprises an annular body 15 of magnetic material that is polarised axially with a North (seeking) pole N at one radial end and a South (seeking) Pole S at the opposite radial end. The body 15 has an axial bore 13 therethrough and a pair of pole plates 14, 16 of generally disc-like form are mounted on an axial, stub adaptor 18. The bore 13 is of non-circular, preferably square, cross-section and the axial adaptor 18 is of a correspondingly-shaped cross-section and made of brass or other suitable high reluctance or non-magnetic material. The axial adaptor 18 is fastened to the drive shaft 17 of an electric motor (not shown) and provides rotational drive to the body 15.

Optionally and preferably the axial adaptor 18 is a loose fit in the bore 13. For example, bore 13 is marginally greater ― e.g. 1mm to 2mm (preferably 1.4mm) greater ― than the side dimension of the axial adaptor 18 that transmits drive thereto and such as to permit the body to tilt or slew to a limited degree. For example, with the bore through body 15 and pole plates 14,16 of a square cross-section having a nominally 24mm side dimension the square-section axial adaptor 18 may have a side dimension of 22.6mm (⅞ inch) so as to pass loosely or with clearance into the bore 13. The clearance provided by this dimensional difference allows the end pole plates 14,16 in use to maintain physical contact with the plate 53, notwithstanding surface imperfections or variations in stiction between co-operating parts, and this ability to cope with a slightly uneven running surface serves to maximise efficiency of the transmitted drive.

The two pole plates 14,16 are of substantially similar dimensions each having a periphery that, all round, is spaced outwardly away from the periphery of the magnetic body 15, e.g. of the order of 1 or 2mm (with a maximum of about 5mm). In one preferred embodiment the plates 14,16 are each 6mm thick and of 75mm nominal diameter.

Although the two pole plates 14,16 may be identical and by magnetic coupling with the engagement plate 53 on gate 10 provide a convenient novel drive transmission for opening and closing gate 10, the magnetic drive transmission can slip and fail to operate satisfactorily if gate closure or opening is resisted. Accordingly the preferred embodiment of this invention provides for a measure of keyed or geared connection between one of the pole plates and the engagement plate 53, this keying being surmountable without giving rise to damage. To this end one of the pole plates (16) is provided with a plurality of peripherally spaced (preferably equi-spaced) pimple-like protrusions 19 that engage in correspondingly spaced recesses or holes 21 in the engagement plate 53.

Whereas magnetic coupling and magnetic drive transmission is provided by both pole plates 14,16 to the engagement plate 53 of the top rail of the gate, pole plate 16 provides a measure of mechanical drive between its protrusions 19 and the recesses or holes 21 in the engagement plate 53. The shape and dimensions of the features 19,21 are such that their somewhat gear-like mechanical inter-connection is sufficient to provide a predetermined resistance force against a force countering the drive, e.g. a stone preventing opening of closure of the gate, or a person or animal pushing against a closed gate (in a direction to open it), but this inter-connection is forcibly surmountable ― with attendant disconnection and slipping but no damage to the mechanism ― if the countering force is sufficiently high, e.g. if the gate is struck by a motor vehicle.

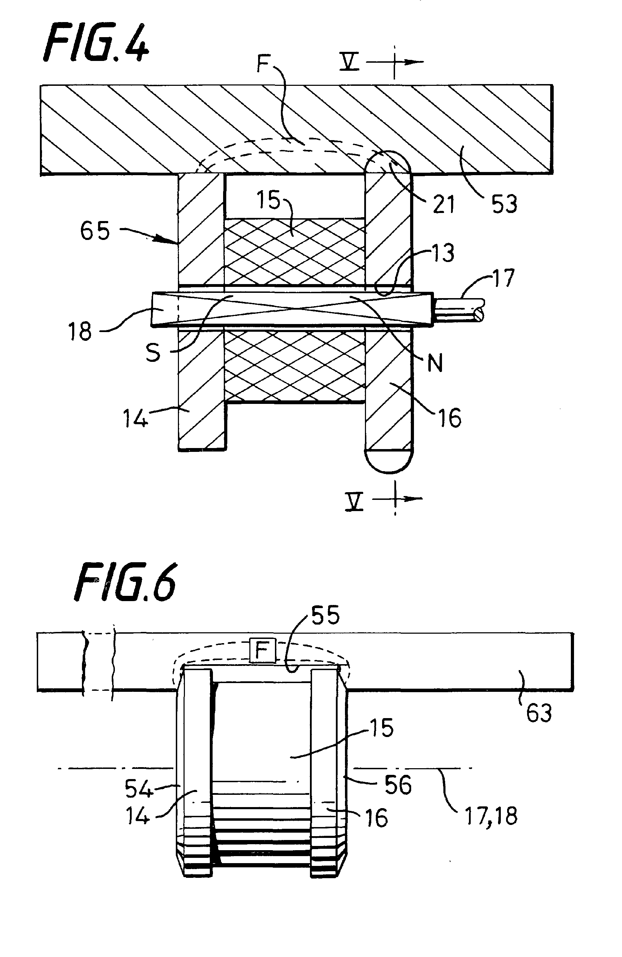

It will be appreciated that due to the magnetic coupling between pole plates 14,16 and engagement plate 53 ― illustrated schematically in Fig 4 by lines of magnetic flux F ― there is no need for arm 34 to be resiliently urged towards plate 53 by a gate spring or the like.

It will also be appreciated that the "geared" pole plate 16 could additionally or alternatively be provided with peripheral depressions that are engaged by protrusions extending from the engagement plate 53.

In another embodiment shown in Fig 6, plate 53 is replaced by a plate 63 of steel or other magnetically attractive material, this plate 63 being provided with an elongate groove 55 of triangular or frusto-triangular cross-section formed therein. The two pole plates 14,16 magnetically bound to the poles of axially magnetised body 15 are chamfered on their outwardly-directed edges, and these chamfered faces 54,56 engage the inclined faces of the groove 55. The included angle of the groove's inclined faces corresponds to that of the inclined faces 54,56 provided by the pole plates. The lines of magnetic flux F are now concentrated to these mutually engaged and magnetically coupled inclined faces 54,56 such that the magnetic engagement between them and the plate 63 is enhanced and provides excellent gripping.

Preferably, and as shown, the radially outermost periphery of each pole plate 14,16 of this embodiment is slightly spaced from the bight surface of the frusto-triangular-section groove 55.

Other modifications and embodiments of the invention, which will be readily apparent to those skilled in this art, are to be deemed within the ambit and scope of the invention, and the particular embodiment(s) hereinbefore described may be varied in construction and detail, e.g. interchanging (where appropriate or desired) different features of each, without departing from the scope of the patent monopoly hereby sought.

## Claims

1. Motion imparting means to effect angular movement of a pivoting member (10) mounted for pivoting motion about an upstanding axis (22), said motion imparting means comprising first and second assemblies and being **characterised in that**
said first assembly includes drive means (65) comprising a magnetic body (15) that
(a) has an outer cylindrical surface and radial end surfaces
(b) is polarised axially of the cylindrical surface, and
(c) has each radial end engaged by an associated pole plate (14,16) that extends outwardly beyond the body's cylindrical surface with its periphery spaced from that cylindrical surface,
**in that** said second assembly comprises an engagement plate (53) to be attached to the pivoting member (10) and, in use, be engaged by the pole plates (14,16) and magnetically coupled thereto,
**and in that** a lever (34) is provided to one end of which the first assembly (65) is to be mounted and that is to be mounted by its opposite end for pivoting motion about an upstanding axis (32) spaced from the pivoting member's pivoting axis (22) and such that said drive means (65) can in use effect a magnetic drive coupling between the first and second assemblies.

2. Motion imparting means according to Claim 1, **characterised in that** the pivoting member (10) is a closure member for an opening.

3. Motion imparting means according to Claim 1 or Claim 2, **characterised in that** the pivoting member (10) is a gate for a throughway.

4. Motion imparting means according to any one of Claims 1 to 3, **characterised in that** one of the said pole plates (16) is provided around its periphery with a plurality of mutually spaced protrusions (19) or depressions, **in that** the engagement plate (53) is provided with correspondingly spaced depressions (21) or protrusions, the protrusions (19) of one said plate (16) in use engaging in the depressions (21) of the other said plate (53) to provide a positive inter-engagement between them that can resist slippage across magnetically coupled surface portions of the drive means.

5. Motion imparting means according to any one of Claims 1 to 3, **characterised in that** each pole plate (14,16) is of generally disc-like form having a peripheral face of cylindrical form, a radial face directed away from the body, and an outwardly directed chamfered face between these two faces at an angle to each, and **in that** the said engagement plate (53) comprises a surface (55) provided with an elongate groove of triangular or frusto-triangular cross-section providing inclined faces which are in use engaged by and magnetically coupled to the two said outwardly-directed chamfered faces (54,56) of the engagement plate (53).

6. Motion imparting means to be operative between first and second assemblies, **characterised in that** the first assembly comprises a magnetic body (15)
(a) having an outer cylindrical surface and radial end surfaces
(b that is polarised axially of the cylindrical surface, and
(c) has each radial end engaged by an associated pole plate (14,16) that extends outwardly beyond the body's cylindrical surface with its periphery spaced from that cylindrical surface;
**in that** the second assembly comprises an engagement plate (53) to be engaged by the pole plates (14,16) and magnetically coupled thereto;
**in that** one of the pole plates (16) is provided around its periphery with a plurality of mutually spaced protrusions (19) or depressions,
**and in that** the engagement plate (53) is provided with correspondingly spaced depressions (21) or protrusions, the protrusions (19) of one said plate (16) in use engaging in the depressions (21) of the other said plate (53) to provide a positive inter-engagement between them that resists slippage across magnetically coupled surface portions of the drive means.

7. Motion imparting means to be operative between first and second assemblies, **characterised in that** the first assembly comprises a magnetic body (15)
(a) having an outer cylindrical surface and radial end surfaces,
(b) that is polarised axially of the cylindrical surfaces, and
(c) has each radial end engaged by an associated pole plate (14,16) that extends outwardly beyond the body's cylindrical surface with its periphery spaced from that cylindrical surface;
**in that** each pole plate (14,16) is of generally disc-like form having a peripheral face of cylindrical form, a radial face directed away from the body, and between these two faces a chamfered face (54,56);
**and in that** the second assembly, which is to be magnetically coupled to the first assembly, comprises an engagement plate (53) having a surface (55) provided with an elongate groove of triangular or frusto-triangular cross-section providing inclined faces which are in use engaged by and magnetically coupled to the two said outwardly-directed chamfered faces (54,56) of the first assembly.

8. Motion imparting means according to any preceding Claim, **characterised in that** the magnetic body (15) is mounted on a shaft (18) of non-circular cross-section that is a loose fit within a bore (13) of like cross-section shape in the body.

9. Motion imparting means according to any preceding Claim, wherein the magnetic body (15) is mounted on a shaft (18) of square cross-section that is a loose fit within a bore (13) of like cross-section shape in the body (15).
